**Europäisches Patentamt**

**European Patent Office**

**Office européen des brevets**

(19)

(11) Veröffentlichungsnummer: **0 325 280**

**A1**

(12) # EUROPÄISCHE PATENTANMELDUNG

(21) Anmeldenummer: **89100979.7**

(22) Anmeldetag: **20.01.89**

(51) Int. Cl.⁴: **B66C 1/02 , B65G 47/91**

(30) Priorität: **21.01.88 DE 3801666**

(43) Veröffentlichungstag der Anmeldung:
**26.07.89 Patentblatt 89/30**

(84) Benannte Vertragsstaaten:
**BE ES FR GB IT NL**

(71) Anmelder: **Haffer, Dieter, Dr.-Ing.**
**Am Sonnenhang 2**
**D-5414 Vallendar(DE)**

(72) Erfinder: **Haffer, Dieter, Dr.-Ing.**
**Am Sonnenhang 2**
**D-5414 Vallendar(DE)**
Erfinder: **Jost, Hermann J.**
**Forststrasse 7**
**D-5424 Kamp-Bornhofen(DE)**

(74) Vertreter: **Patentanwälte Grünecker,**
**Kinkeldey, Stockmair & Partner**
**Maximilianstrasse 58**
**D-8000 München 22(DE)**

(54) **Elastische Saugteller für empfindliche Objekte.**

(57) Ein Vakuum-Saugteller mit einem Elastomerkörper (11), der an seiner einen Seite eine umlaufende Dichtungslippe (12) und an der gegenüberliegenden Seite eine Einrichtung zum Herstellen einer Strömungsverbindung mit einer Unterdruckquelle aufweist. Die Dichtungslippe (12) umschließt einen in eine Vielzahl von einzelnen abgedichteten Saugkammern (19) unterteilten Saugraum. Jede Saugkammer (19) ist mit wenigstens einem Verbindungskanal (22) versehen, der die jeweilige Saugkammer mit der Unterdruckseite verbindet. Jeder Verbindungskanal (22) ist in einen vertikalen Abschnitt (22a) und einen horizontal verlaufenden Abschnitt (22b) unterteilt. Mit Hilfe des Saugtellers können Objekte mit empfindlichen Oberflächen, wie frisch hergestellte Betonsteine, angehoben und transportiert werden, ohne daß die Oberfläche der Objekte Schaden nimmt.

Fig. 3

EP 0 325 280 A1

## Elastische Saugteller für empfindliche Objekte

Die Erfindung bezieht sich auf elastische Saugteller für Vakuumsysteme. Saugnäpfe bzw. Saugteller aus elastisch verformbarem Werkstoff, die mit Hilfe von starren, meist metallischen Teilen an ein Unterdrucksystem angeschlossen werden, eignen sich speziell zum Anheben und Transportieren kompakter Objekte mit im wesentlichen ebener Oberfläche. Wenn ein solcher Saugteller an dem zu transportierenden bzw. anzuhebenden Objekt anliegt und in dem Hohlraum zwischen dem Saugteller und dem Objekt ein Unterdruck erzeugt wird, so lassen sich erhebliche Kräfte übertragen. Insbesondere ist es auf diese Weise möglich, relativ schwere Objekte anzuheben und zu einem gewünschten Platz zu transportieren, wo die Objekte durch Aufheben des Unterdruckes abgesetzt werden.

Bei unempfindlichen Objekten treten hierbei keine besondere Probleme auf. Erforderlich ist lediglich, daß der Saugnapf entlang seiner Außenkontur eine nachgiebige Lippe besitzt, die eine gute Abdichtung zwischen dem Saugnapf und dem anzuhebenden Objekt gewährleistet.

Schwierigkeiten ergeben sich aber, wenn empfindliche Objekte, insbesondere solche mit wenig widerstandsfähiger Oberfläche, durch Saugteller angehoben werden sollen. So ist es beispielsweise wünschenswert, "frische" Beton-Verbundsteine unmittelbar nach der Herstellung handhaben zu können, obgleich derartige frisch hergestellte Steine erst nach einigen Tagen eine hinreichend hohe Festigkeit aufweisen. Probleme treten insbesondere bei Verbundsteinen mit "Vorsatzbeton" auf, also bei Betonsteinen, die in ihrem oberen Bereich aus einer relativ dünnen, meist feinkörnigen Deckschicht bestehen, welche mit dem darunterliegenden "Kernbeton" nicht immer ganz oder noch nicht ganz homogen verbunden ist.

Aus dem schwedischen Gebrauchsmuster GM 80-0078 ist beispielsweise ein Saugnapf mit einem metallischen Anschlußstück und einem daran befe- stigten Elastomerkörper bekannt. Dieser Elastomer- körper besitzt insgesamt drei konzentrisch zueinander angeordnete Dichtlippen unterschiedlichen Durchmessers.

Es ist bereits ein Saugteller für Beton-Verbundsteine bekannt, der ein Unterdruck-Anschlußstück und einen daran befestigten Elastomer-Körper aufweist. Die Dichtlippe dieses Elastomerkörpers folgt der äußeren Kontur der zu transportierenden Steine. An der Oberfläche der zu transportierenden Steine liegt dieser bekannte Saugteller mit seiner umlaufenden Dichtlippe sowie mit einer Vielzahl von Gumminoppen an, die in der Innenoberfläche des bekannten Saugtellers ausgebildet sind. Diese Gumminoppen dienen dazu, den Saugteller an vielen Stellen auf der Steinoberfläche abzustützen. Die von diesen Gumminoppen eingenommene Oberfläche des Saugtellers darf nicht zu groß sein, da der Unterdruck lediglich in den Hohlräumen zwischen der umlaufenden Dichtlippe und den Noppen wirksam ist. Andererseits jedoch sollten die Abstände zwischen den einzelnen Gumminoppen relativ klein sein, da sonst die empfindliche "frische" Steinoberfläche leicht beschädigt wird. Solche Beschädigungen können beispielsweise bestehen in einem "Herausreißen" von Betonteilen, vor allem im Bereich der Unterdruck-Anschlußstellen; "Blasenbildung" zwischen den Noppen und unter diesen; "Schiebespuren" durch seitliche Verschiebung der umlaufenden Dichtlippe beim Ansaugen.

Ferner besteht bei diesem bekannten Saugteller die Gefahr, daß bei Undichtigkeiten der erforderliche Unterdruck nicht in der benötigten Höhe aufgebracht werden kann, so daß nicht nur ein einzelner Stein, sondern eine ganze Steinlage nicht abgehoben und abtransportiert werden kann. In einem solchen Fall wird nicht nur eine beträchtliche Menge an Ausschuß produziert, sondern wird eine gravierende Störung des gesamten Betriebsablaufes hervorgerufen.

Der Erfindung liegt die Aufgabe zugrunde, einen Unterdruck-Saugteller aus elastisch verformbaren Werkstoff zum Anheben und Transportieren empfindlicher Objekte, insbesondere von frisch hergestellten Beton-Verbundsteinen der im Oberbebriff des Anspruchs 1 angegebenen Gattung so auszubilden, daß eine mehrstufige Dichtwirkung vorliegt und die Gefahr des Herausreißens von Teilchen aus der Oberfläche des anzuhebenden und zu transportierenden Objektes wesentlich herabgesetzt ist. Innerhalb dieser Aufgabe verfolgt die Erfindung das Ziel, der Bildung schädlicher Luftströmungen beim Evakuieren des Saugraumes zu begegnen, da zu starke Luftströmungen Schäden in den Oberflächen des zu transportierenden Objektes hervorrufen können. Auch soll die spezifische Oberflächenbelastung der zu transportierenden Objekte gering gehalten und doch eine gute Abstützung des Saugtellers auf der Oberfläche des zu transportierenden Objektes gewährleistet werden.

Diese Aufgabe wird bei der im Anspruch 1 angegebenen Erfindung durch die im kennzeichnenden Teil des Anspruchs 1 angegebenen Merkmale gelöst.

Bevorzugte Ausführungsformen und weitere Ausgestaltungen der Erfindung sind in den Unteransprüchen beschrieben.

Die erfindungsgemäßen Saugteller zeichnen sich in ihren bevorzugten Ausführungsformen durch die folgenden Merkmale aus:

- Der Ansaugraum ist in zahlreiche Saugkammern unterteilt, die jede für sich einen abschließbaren Saugraum bilden;
- jede der Kammern ist mit wenigstens einer Verbindung zum Absauganschluß, d.h. zur Unterdruckquelle, verbunden, wobei zweckmäßigerweise wegen des Druck- bzw. Strömungsausgleiches ein Haupt-Verbindungskanal zwischen mehreren Unterdruck-Anschlußstellen vorgesehen ist;
- die von dem Unterdruckanschluß zu den einzelnen Saugräumen reichenden Luftverbindungen sind derart verästelt, daß deren freier Strömungsquerschnitt an die Anzahl der Saugkammern bzw. Anschlüsse angepaßt ist, die von der jeweiligen Luftverbindung zu versorgen sind. Ferner ist dafür Sorge getragen, daß jeder der Anschlußkanäle (Verbindungskanäle) eine möglichst große Längenabmessung aufweist;
- jeder Verbindungskanal zwischen den einzelnen Saugräumen und dem Haupt-Unterdruckanschluß weist in seinem Verlauf wenigstens eine, vorzugsweise jedoch mehrere starke Richtungsänderungen auf;
- die Verbindungskanäle besitzen vorzugsweise einen rechteckigen Querschnitt, wobei die Abmessungen in Breitenrichtung und in Höhenrichtung deutlich unterschiedlich voneinander gewählt sind;
- die Dichtlippe besitzt eine große Nachgiebigkeit senkrecht zur Oberfläche des transportierenden Objektes (Steinoberfläche) mit einer derart stabilen Ausbildung des Lippenfußes, daß sich die Lippe bei Vakuum-Beaufschlagung nicht seitlich auf der Steinoberfläche verschiebt;
- auf der Innenseite der eigentlichen Dichtlippe verläuft der Kontur dieser Dichtlippe folgend eine Ringkammer in Form einer umlaufenden Vertiefung, die jedoch nicht an das Unterdrucksystem anschließbar ist;
- innerhalb des Fußes der Dichtlippe und der Außenkontur im wesentlichen folgend ist ein umlaufender Saugraum vorgesehen, der vorteilhafterweise in eine Vielzahl von Saugkammern unterteilt ist, von welchen jede Saugkammer wenigstens einen Verbindungskanal zum Unterdruck-Anschluß besitzt;
- der im Inneren des vorstehend genannten umlaufenden Saugraums verbleibende Innenraum des gesamten Ansaugraums ist in eine Vielzahl, vorzugsweise länglich ausgebildeter Saugkammern unterteilt, welche jeweils mindestens einen Verbindungskanal zum Unterdruck-Anschluß besitzen;
- diese länglichen Saugkammern haben vorzugsweise eine Breite von weniger als 20 mm und ihre Begrenzungsstege haben einen Flankenwinkel von vorzugsweise etwa 45°, wobei die Auflagefläche der Stege, mit welchen sich dieselben auf der Oberfläche des zu transportierenden Objektes abstützen, vorzugsweise eine Breite von 1 bis 4 mm aufweisen.

Der mit Hilfe der Erfindung erzielbare technische Fortschritt ergibt sich in erster Linie daraus, daß

- eine mehrstufige Dichtungswirkung erreicht wird;
- an keiner Stelle der Oberfläche des zu transportierenden Objektes ein schädlicher Luftstrom entsteht;
- der Ausbildung schädlicher Luftströme durch die starke Richtungsänderungen der Strömungs-Verbindungskanäle entgegengewirkt ist, so daß keine Partikel aus der Oberfläche des zu transportierenden Objekte (Sandkörner im Falle von frisch hergestellten Beton-Verbundsteinen) herausgerissen werden;
- in den Orten der Richtungsänderung in den Verbindungskanälen gegebenenfalls dennoch mitgerissene Fremdpartikel aufgefangen werden;
- eine Verstopfung der Verbindungskanäle durch die gegebenenfalls dennoch mitgerissene Partikel verhindert wird, da die Verbindungskanäle rechteckige Querschnitte besitzen, wohingegen die Partikel in der Regel eine runde Gestalt aufweisen;
- die Flanken der Saugkammern bzw. derer Stege in Winkeln von deutlich weniger als 90° relativ zur Steinoberfläche geneigt sind, wodurch unerwünschte Ablagerungen und Verstopfungen erschwert und Reinigungsarbeiten erleichtert werden;
- sich der erfindungsgemäße Saugteller auf eine Vielzahl von vergleichsweise großflächigen Stegen, welche die einzelnen Saugkammern voneinander erfolgen, abstützt, wodurch die spezifische Oberflächenbelastung auf der Oberfläche des zu transportierenden Objekte gering gehalten ist, aber dennoch die Gesamt-Ansaugfläche des Saugtellers recht groß ist;
- sich Objekte mit empfindlicher Oberfläche, wie frisch hergestellte Betonsteine, schonend ansaugen und transportieren lassen;
- trotz rauher oder poröser Oberfläche der Objekte, wie die rauhe, poröse Oberfläche von Betonsteinen, eine gute Dichtwirkung erreicht wird, und
- bei örtlicher Undichtigkeit, d.h. bei Undichtigkeit in einer oder mehreren Saugkammern, der Unterdruck im gesamten Saugraum nicht stark beeinträchtigt wird (vgl. Schotten bei Seeschiffen), sondern daß selbst bei örtlichen Undichtigkeiten ein hinreichend starker Unterdruck in den dicht gebliebenen Bereichen des Saugraumes erhalten bleibt, so daß Einzelsteine bzw. ganze Steinlagen erfolgreich angehoben und transportiert werden können.

Die erwähnten, absichtlich herbeigeführten starken Umlenkungen des Luftstroms in den Verbindungskanälen werden, ebenso wie die Formgebung aller Kammern und Stege usw. ausschließlich durch eine entsprechende Ausgestaltung der zur Herstellung des Elastomerkörpers benutzten Vulkanisationsform erreicht, insbesondere durch eine zweckmäßige Ortslage der Trennebene, welche die obere und die untere Formhälfte der Vulkanisationsform voneinander trennt. Die Formhälften sind auf einfache Weise so bearbeitet, daß nennenswerte nachträgliche Arbeiten an dem Elastomerkörper nicht nötig sind. Wird an dem Elastomerkörper ein hinterschnittener Bereich vorgesehen, so kann ein reines Gummiformteil als eigentlicher Saugnapf verwendet werden. Um diesen Saugnapf zu einem Saugteller zu komplettieren, kann das benötigte Unterdruck-Anschlußstück, welches aus Metall oder Kunststoff besteht, nachträglich ohne dauerhafte mechanische Verbindung mit dem Elastomer-Saugnapf hinzugefügt werden. Die Abdichtung zwischen dem Elastomer-Saugnapf und dem Unterdruck-Anschlußteil erfolgt ohne besondere weitere Maßnahmen allein durch den Anschluß des Anschlußstükkes am Unterdrucksystem. Der hinterschnittene Bereich im Elastomerkörper dient zur Aufnahme des Unterdruck-Anschlußstückes. Eine zusätzliche Dichtwirkung stellt sich beim Aufbringen des Unterdruckes von selbst ein. Aus den vorstehend genannten Gründen läßt sich der erfindungsgemäße Saugteller trotz seiner sehr speziellen Formgebung äußerst preisgünstig herstellen.

Die Erfindung wird im folgenden anhand von Ausführungsbeispielen unter Bezug auf die Zeichnung (Figuren 3 bis 9) näher beschrieben. In dieser zeigt:

Fig. 1 einen Schnitt durch einen herkömmlichen Saugteller mit drei konzentrisch zueinander angeordneten Dichtlippen, wobei diese Dichtlippen unterschiedliche Durchmesser aufweisen und der Dichtteller außerdem ein anvulkanisiertes Unterdruck-Anschlußstück aufweist,

Fig. 2 einen Schnitt durch einen anderen herkömmlichen Saugteller mit lediglich einer kontinuierlichen Dichtlippe sowie mit zahlreichen Noppen und einem anvulkanisierten Unterdruck-Anschlußstück in Form einer Metallplatte,

Fig. 3 einen Schnitt durch den Elastomerkörper des Saugtellers nach der Erfindung entlang Linie III-III in Fig. 6,

Fig. 4 einen Schnitt durch ein starres Unterdruck-Anschlußstück für den Saugteller gemäß Fig. 3,

Fig. 5 eine Aufsicht auf das in Fig. 4 dargestellte Anschlußstück,

Fig. 6 eine erste Ausführungsform eines Saugtellers in einer Unteransicht,

Fig. 7 eine Aufsicht auf den in Fig. 5 dargestellten Saugteller, wobei das Anschlußstück weggeschnitten ist,

Fig. 8 eine andere Ausführungsform des Saugtellers in einer Unteransicht und

Fig. 9 eine Aufsicht auf den in Fig. 8 dargestellten Saugteller, wobei das Anschlußstück weggeschnitten ist.

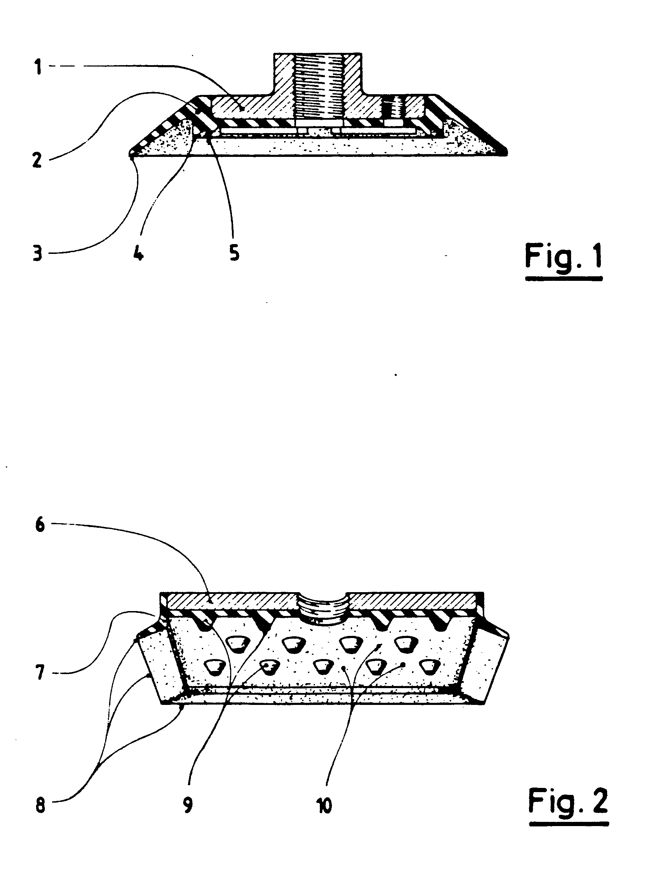

Der in Fig. 1 dargestellte bekannte Saugnapf nach dem schwedischen Gebrauchsmuster GM 80-0078 besteht aus einem Unterdruck-Anschlußstück 1 aus Metall und einem daran anvulkanisierten oder in anderer Weise luftdicht befestigten Elastomerkörper 2. Dieser besitzt insgesamt drei kreisförmige konzentrische Dichtlippen 3, 4 und 5, wodurch mit hoher Sicherheit eine Abdichtung des Saugraumes erreicht wird. Außerdem können wegen der beiden inneren Dichtlippen 4 und 5, die jeweils einen kleineren Durchmesser aufweisen, gewölbte Oberflächen besser abgedichtet werden.

Fig. 2 zeigt einen bekannten Saugteller für Beton-Verbundsteine, mit einem aus Metall bestehenden Anschlußstück 6 und einen damit luftdicht verbundenen Elastomerkörper 7. Dieser Köper 7 besitzt eine Dichtlippe, welche der im wesentlichen rechteckigen äußeren Kontur der Steine angepaßt ist, wobei diese Dichtlippe überall etwas kleiner dimensioniert ist als die ebene Steinoberfläche. Im Inneren des Saugraums sind bei dem bekannten Saugteller zahlreiche Gumminoppen 9 vorgesehen, mit welcher sich der Saugteller auf den zu hebenden und zu transportierenden Steinen abstützt. Im Inneren des Saugraums ist zwischen den Saugnoppen 8 eine Vielzahl von miteinander verbundenen Saugräumen 10 ausgebildet.

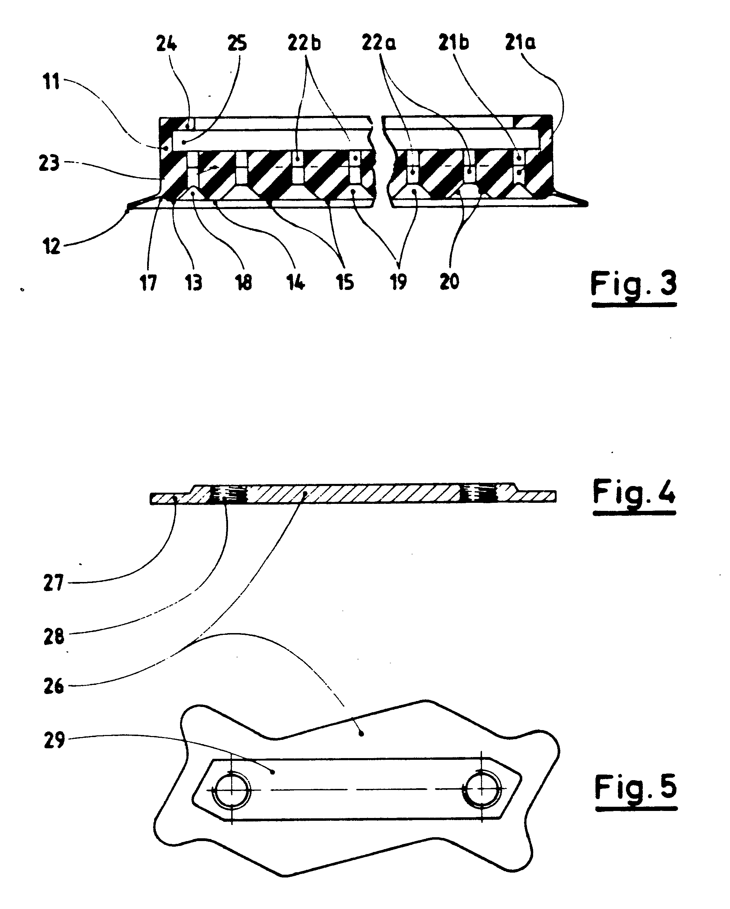

Im folgenden werden die die Erfindung erläuternden Figuren 3 bis 9 näher beschrieben.

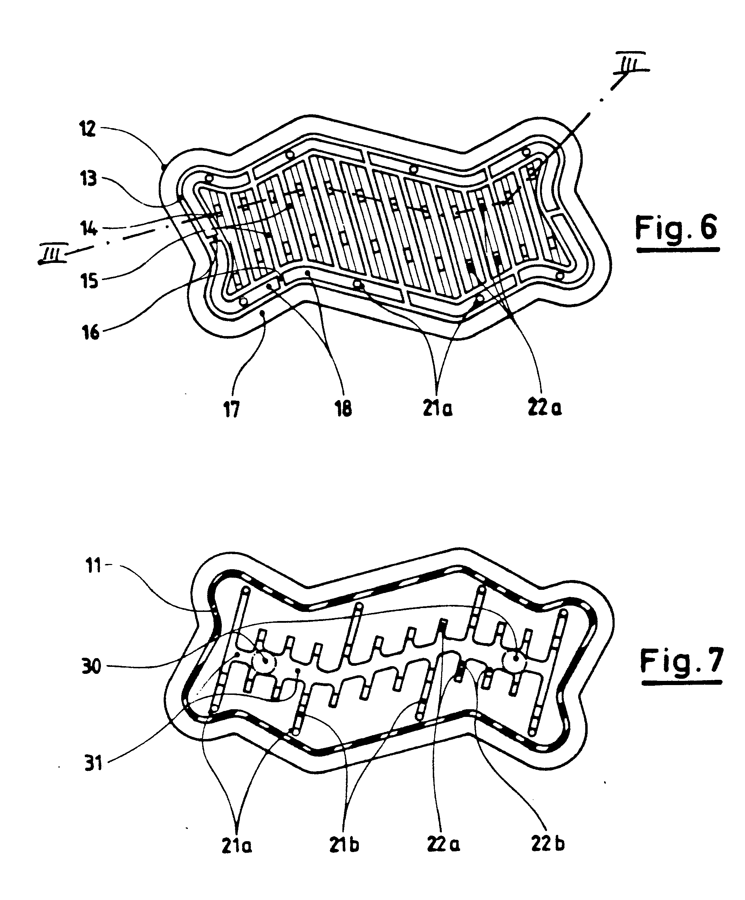

Fig. 3 zeigt einen Schnitt durch einen Elastomerkörper 11 entlang der Linie III-III in Fig. 6. Der Elastomerkörper 11 umfaßt eine umlaufende Dichtlippe 12, einen äußeren Ringsteg 13, einen inneren Ringsteg 14 sowie eine Vielzahl von Längsstegen 15 und Querstegen 16 (Fig. 6). Dadurch werden ein äußerer Ringkanal 17, der jedoch nicht an eine Unterdruckquelle anschließbar ist, ein vorzugsweise durch Querstege 16 geteilter innerer Ringkanal 18, der an die nicht dargestellte Unterdruckquelle anschließbar ist, sowie zahlreiche längliche Saugkammern 19 gebildet. Wie den Figuren 3 und 6 zu entnehmen, verlaufen diese längliche Saugkammern 19 parallel zueinander innerhalb des inneren Ringkanals 18. Diese Saugkammern 19 besitzen, ebenso wie der Ringkanal 18, geneigte Flanken 20 von geringer Steilheit. Beispielsweise beträgt der bevorzugte Neigungswinkel dieser Flanken 45° in bezug auf die Steinoberfläche. Vom Ringkanal 18 verlaufen in Richtung auf einen hinterschnittenen Bereich 25, welcher zur Aufnahme eines Unterdruck-Anschlußstückes 26 dient, Verbindungskanäle 21. Diese Verbindungskanäle 21 sind unterteilt in einen ersten vertikal verlaufenden Abschnitt 21a und einen zweiten Abschnitt 21b, der horizontal verläuft, wie am besten in Fig. 7 zu erkennen. Die Grenzebene zwischen dem horizontal verlaufenden Abschnitt 21b und dem vertikal verlaufenden Abschnitt 21a der Verbindungskanäle 21 ist durch die in Fig. 3 mit dem Bezugszeichen 23 bezeichnete Trennebene einer nicht dargestellten Vulkanisationsform gegeben. In gleicher Weise geht von jeder Saugkammer 19 wenigstens ein Verbindungskanal 22 aus, der in einen vertikal verlaufenden Abschnitt 22a und einen horizontal verlaufenden Abschnitt 22b unterteilt ist. Die vertikal verlaufenden Verbindungskanalabschnitte 21a und 22a sind am besten in den Figuren 3 und 6 dargestellt, wohingegen die horizontal verlaufenden Verbindungskanalabschnitte 21b und 22b am besten in den Figuren 3 und 7 zu erkennen sind. Auch bei den Verbindungskanälen 22 verläuft die Grenzebene zwischen den vertikal verlaufenden Abschnitten 22a und den horizontal verlaufenden Abschnitten 22b durch die in Fig. 3 dargestellte Trennebene 23 der nicht dargestellten Vulkanisierform. Dadurch, daß die von der Unterdruckquelle angesaugte Luft aus den Saugkammern 19 zunächst durch die vertikal verlaufenden Verbindungskanalabschnitte strömt und sodann durch die horizontal verlaufenden Verbindungskanalabschnitte strömt, wird die Luftströmung einer starken Umlenkung (Richtungsänderung) in etwa im Bereich 25 der Formtrennebene 23 unterworfen.

Der hinterschnittene Bereich 25 ist durch eine relativ dicke umlaufende, elastische Lippe 24 im Elastomerkörper 11 gebildet. Wird das in Fig. 4 dargestellte Unterdruck-Anschlußstück 26 in den hinterschnittenen Bereich 25 hineingeknöpft, so bildet die umlaufende Lippe 24 eine Abdichtung. In dem Anschlußstück 26 sind zwei Gewindeanschlüsse 28 ausgebildet, mit deren Hilfe das Anschlußstück mit einer nicht dargestellten Unterdruckquelle verbunden werden kann. Wird in dem erfindungsgemäßen Saugteller ein Unterdruck aufgebaut, so sorgt ein starrer, leistenartiger Vorsprung 29 (Fig. 5) des Anschlußstückes 26 sowohl für eine Führung als auch für eine Begrenzung gegen ein zu starkes Zusammenpressen der elastischen Lippe 24.

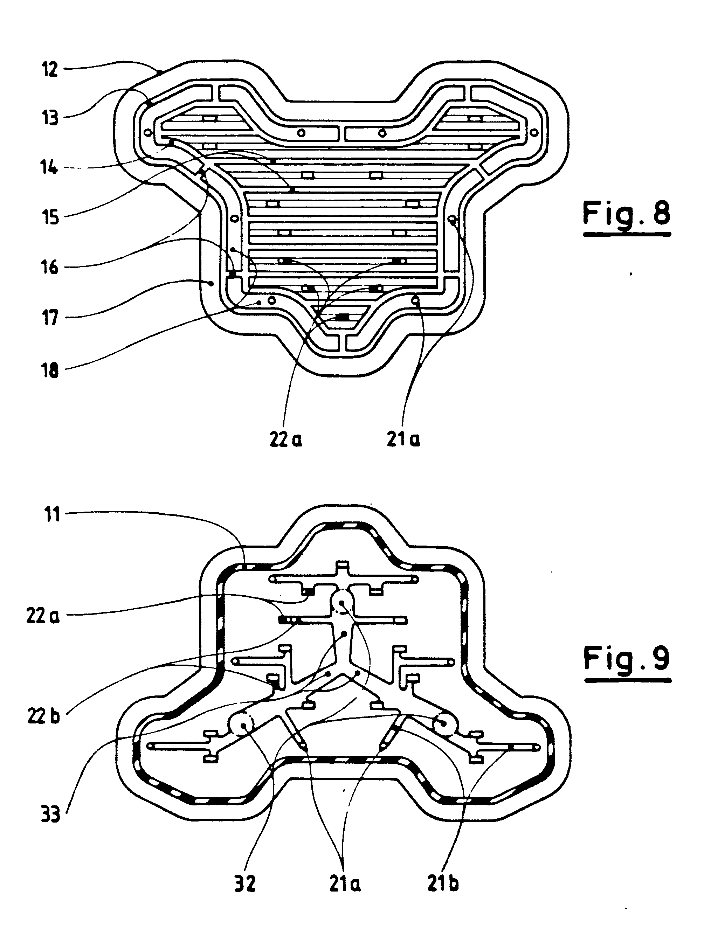

Die vorstehend erwähnte Trennebene 23 verläuft durch den vollen Elastomer-Querschnitt, wie in Fig. 3 dargestellt. Diese Trennebene stimmt im wesentlichen mit dem Boden der horizontal verlaufenden Verbindungskanäle 22b überein. Da diese horizontalen Verbindungskanäle eine Tiefe von 2 bis 6 mm, vorzugsweise von ca. 4 mm, bezogen auf die in den Figuren 7 und 9 dargestellte Oberfläche des Elastomerkörpers 11, aufweisen, verläuft die Formtrennebene 23 in einer Tiefe von 2 bis 6 mm, vorzugsweise etwa 4 mm, unterhalb der Oberfläche des Elastomerkörpers. Es versteht sich, daß es sich bei der in Rede stehenden Oberfläche des Elastomerkörpers um die in Fig. 3 den unteren Abschluß des hinterschnittenen Bereiches 25 bildende Oberfläche handelt.

Fig. 6 zeigt eine Unteransicht einer ersten Ausführungsform des erfindungsgemäßen Saugtellers. Fig. 7 zeigt eine Aufsicht auf den in Fig. 6 dargestellten Saugteller, wobei jedoch in Fig. 7 die umlaufende Lippe 24 weggeschnitten worden ist. Es handelt sich somit bei Fig. 7 speziell um einen Schnitt durch den Elastomerkörper 11, wobei die Schnittebene in Höhe des hinterschnittenen Bereiches 25 verläuft. Die erste Ausführungsform gemäß Figuren 6 und 7 weist zwei Unterdruckanschlußstellen 30 auf, die durch einen in der Elastomerkörper-Oberfläche ausgebildeten, horizontal verlaufenden Hauptkanal 31 miteinander verbunden sind. Wie in der Zeichnung dargestellt, reicht der Hauptkanal 31 über die beiden Anschlußstellen 30 hinaus. Von diesem Hauptkanal zweigen sämtliche horizontal verlaufenden Verbindungskanalabschnitte 21b und 22b ab. In diese horizontal verlaufende Verbindungskanalabschnitte mün den die sich senkrecht zu diesen Kanälen erstreckenden vertikalen Verbindungskanalabschnitte 21a und 22a, wie am besten den Fig. 6 und 7 zu entnehmen. Vorzugsweise münden die vertikalen Verbindungskanalabschnitte soweit wie möglich vom Hauptkanal 31 entfernt in die horizontal verlaufenden Abschnitte 21b und 22b. Die Stellen, in welchen die vertikal verlaufenden Kanalabschnitte in die horizontal verlaufenden Kanalabschnitte einmünden, sind Orte einer starken Richtungsänderung für die aus dem Saugraum herausgesaugten Luftströme.

Sämtliche Abschnitte der Verbindungskanäle einschließlich des Hauptkanals werden bei der Vulkanisation erzeugt. Zum Ausbilden der horizontal verlaufenden Kanalabschnitte 21b, 22b sowie 31 beim Vulkanisieren besitzt die eine Hälte der nicht dargestellten Vulkanisationsform leistenartige Vorsprünge. Für die vertikalen Kanalabschnitte 21a, 22a sind in der anderen Hälte der Vulkanisationsform stiftartige Vorsprünge vorgesehen. Die leistenartige Vorsprünge und die stiftartigen Vorsprünge der beiden Formhälften berühren einander in der Formtrennebene 23 (Fig. 3).

Für die Verbindungskanäle wird ein möglichst rechteckiger Querschnitt vorgesehen, soweit dieses formtechnisch mit nicht zu hohem Aufwand erreichbar ist.

Fig. 6 zeigt deutlich die umlaufende Dichtlippe 12, den äußeren Ringsteg 13, den inneren Ringsteg 14 sowie die Längsstege 15 und Querstege 16. Ferner sind der äußere Ringkanal 17, der nicht an die Verbindungskanäle angeschlossen ist, sowie ein durch Querstege 16 unterteilter innerer Ringkanal zu erkennen. Dieser innere Ringkanal 18 ist durch die Querstege 16 in eine Vielzahl länglicher Saugkammern unterteilt.

Es ist zu beachten, daß sich keiner der vertikalen Kanalabschnitte 21a, 22a direkt in den Hauptkanal 31 öffnet. Alle vertikalen Verbindungskanalabschnitte münden in die vom Hauptkanal 31 abzweigenden, horizontal verlaufenden Kanalabschnitte.

Die in den Figuren 6 und 7 dargestellte Ausführungsform der Erfindung entspricht ihrer äußeren Form nach im wesentlichen der Form eines Betonsteines, wie auch der in Fig. 2 dargestellte herkömmliche Saugteller. Die Figuren 8 und 9 zeigen eine andersgestaltete Ausführungsform der Erfindung, deren Gestalt an ein dreiblättriges Kleeblatt erinnert. Die in Fig. 8 dargestellte Untersicht auf die Saugteller-Unterfläche läßt in der anhand der ersten Ausführungsform beschriebenen Weise eine Vielzahl von vertikal verlaufenden Verbindungskanälen 21a und 22a erkennen, die die länglichen Saugräume vermittels von in Fig. 9 dargestellten horizontal verlaufenden Verbindungskanalabschnitten 21b, 22b sowie mit Hilfe eines horizontal verlaufenden Hauptkanals 33 mit einer nicht dargestellten Unterdruckquelle verbinden.

Die Ausführungsform gemäß Figuren 8 und 9 besitzt einen dreiarmigen, sternförmigen, horizontal verlaufenden Hauptkanal 33, in der Nähe von deren Endabschnitten jeweils eine Unterdruck-Anschlußstelle 32 ausgebildet ist. Von diesem sternförmig ausgebildeten Hauptkanal 33 zweigen die horizontalen Abschnitte 21b und 22b der Verbindungskanäle ab, wie anhand von Figuren 6 und 7 beschrieben. Was die Querschnittsgestalt und die Tiefe der Verbindungskanäle sowie die Gestalt der Stege und Flanken angeht, so gilt für die Ausführungsform gemäß Figuren 8 und 9 das bereits anhand der Ausführungsformen gemäß Figuren 6 und 7 Gesagte. Auch bei der Ausführungsform gemäß Figuren 8 und 9 bildet die in Fig. 3 dargestellte Trennebene 23 die Grenzebene zwischen den horizontal verlaufenden Kanälen bzw. Kanalabschnitten 21b, 22b und 33 und den vertikal verlaufenden Kanalabschnitten 21a und 22a.

Bei allen Ausführungsformen sind die länglichen Saugkammern 19 mit wenigstens einem vertikalen Kanalabschnitt 22a versehen, der mit der nicht dargestellten Unterdruckquelle in Verbindung steht. Lediglich die kürzesten der Saugkammern 19 haben nur eine einzige derartige Strömungsverbindung mit der Unterdruckquelle. Alle übrigen Saugkammern 19 sind mit zwei Strömungsverbindungen zur Unterdruckquelle in Form der vertikal verlaufenden Verbindungskanalabschnitte versehen, welche nach einer starken Richtungsänderung in die horizontal verlaufenden Kanalabschnitte bzw. die Hauptkanäle übergehen und von dort über die Unterdruck-Anschlußstellen 30 (Fig. 7) bzw. 32 (Fig. 9) mit einer Unterdruckquelle in Verbindung sind. Gemäß Fig. 8 sind die mit Hilfe der Querstege 16 im Ringkanal 18 gebildeten Saugräume mit nur einem einzigen Verbindungskanal 21a versehen.

Den Figuren 7 und 9 ist zu entnehmen, daß die horizontal verlaufenden Verbindungskanalabschnitte 21b, 22b möglichst weit voneinander entfernt angeordnet sind, um die Gesamtfläche des Saugraumes möglichst gleichmäßig zu versorgen. Außerdem sind die von den Hauptkanälen 31 und 33 abzweigenden, horizontal verlaufenden Kanalabschnitte so orientiert, daß sich außer der bereits erwähnten 90°-Richtungsänderung beim Übergang von einem vertikalen Kanalabschnitt in einen horizontalen Kanalabschnitt noch weitere Richtungsänderungen für die die Kanäle durchströmenden Luftströme ergeben. Wie bei den bereits erwähnten 90°-Richtungsänderungen beim Übergang von einem Vertikalkanal in einen Horizontalkanal, erfolgt auch die erwähnten weiteren Richtungsänderungen beim Durchströmen der Horizontalkanäle im Bereich der Formtrennebene 23.

Wie den Figuren 6 bis 9 zu entnehmen, mündet keiner der vertikalen Verbindungskanalabschnitte direkt an einen der Hauptkanäle 31 oder 32. Auf diese Weise wird vermieden, daß eine nicht durch eine Richtungsänderung gekennzeichnete Strömungsverbindung zwischen einem Hauptkanal und der Oberfläche eines zu transportierenden Objektes, wie einer frischen Betonsteinoberfläche besteht. Durch die Richtungsänderungen in ihren Strömungskanälen erfahren die aus dem Saugraum abgesaugten Luftmassen eine Verminderung ihrer Geschwindigkeit, so daß die Wahrscheinlichkeit verringert wird, daß Partikel beispielsweise von einer Steinoberfläche mitgerissen werden. Der bei dem erfindungsgemäßen Saugteller innerhalb der umlaufenden Dichtungslippe vorhandene Gesamt-Saugraum ist in eine Vielzahl von einzelnen Saugkammern unterteilt, die wegen ihrer Stege 15, 16 unabhängig voneinander eine Saugwirkung entfalten.

Ferner ist zu unterstreichen, daß bei dem erfindungsgemäßen Saugteller eine praktisch "kreuzungsfreie" Luftführung in verschiedenen Ebenen vorgesehen ist, wobei es zum Hervorbringen der Luftkanäle in dem Elastomerkörper der erfindungsgemäßen Saugteller keiner komplizierten Maßnahmen, wie Hinterschneidungen, in den Vulkanisationsformen bedarf.

Die Breite der Saugkammern 19 ist deutlich geringer als die Länge dieser Saugkammern und beträgt vorzugsweise weniger als 20 mm. Entsprechendes gilt für die im Ringkanal 18 mittels der Querstege 16 gebildeten Saugkammern.

Kommt es bei den Saugtellern nach der Erfindung durch Gebrauch zu Verschleißerscheinungen am Elastomerkörper, so kann dieser mühelos gegen einen neuen Elastomerkörper ausgetauscht werden. Das Unterdruck-Anschlußstück 26 braucht dabei nicht ausgetauscht zu werden.

## Ansprüche

1. Unterdruck-Saugteller aus elastisch verformbarem Werkstoff zum Anheben und Transportieren empfindlicher Objekte, beispielsweise von frisch hergestellten Beton-Verbundsteinen, mit einem Elastomerkörper und einem mit diesem Elastomerkörper verbundenen starren Unterdruck-Anschlußstück sowie einer am Elastomerkörper ausgebildeten umlaufenden Dichtlippe,
dadurch **gekennzeichnet,**
daß die Gesamtheit des von der Dichtlippe (12) umschlossenen Saugraums in eine Vielzahl von vorzugsweise länglichen Saugkammern (18, 19) unterteilt ist, von denen jede eine umlaufende Abdichtung besitzt und daß jede Saugkammer durch mindestens einen Verbindungskanal (21, 22) mit einer Unterdruckquelle in Strömungsverbindung steht.

2. Saugteller nach Anspruch 1, dadurch gekennzeichnet, daß jeder Verbindungskanal (21, 22) wenigstens eine drastische Richtungsänderung aufweist.

3. Saugteller nach Anspruch 1 oder 2, dadurch gekennzeichnet, daß mehrere, vorzugsweise zwei oder drei, Unterdruck-Anschlußstellen (30, 32) im Elastomerkörper (11) vorhanden sind und daß diese Unterdruck-Anschlußstellen durch einen Hauptkanal (31, 33) miteinander verbunden sind.

4. Saugteller nach einem der vorhergehenden Patentansprüche, dadurch gekennzeichnet, daß von der Unterdruckanschlußstelle (30, 32) bzw. vom Hauptkanal (31, 33) ausgehend eine Verästelung der Verbindungskanäle derart erfolgt, daß sich die Größe des jeweiligen Strömungsquerschnittes in Abhängigkeit von der Anzahl der davon abzweigenden Verbindungskanäle ändert.

5. Saugteller nach einem der vorhergehenden Patentansprüche, dadurch gekennzeichnet, daß jeder Verbindungskanal (21, 22) auf einen möglichst großen Teil seiner Länge beabstandet von anderen Verbindungskanälen ausgebildet ist.

6. Saugteller nach einem der vorhergehenden Patentansprüche, dadurch gekennzeichnet, daß alle Verbindungskanäle (21, 22) rechteckige Kanalquerschnitte besitzen, bei denen die Breitenabmessung deutlich unterschiedlich von der Höhenabmessung gewählt ist.

7. Saugteller nach einem der vorhergehenden Patentansprüche, dadurch gekennzeichnet, daß innerhalb der umlaufenden Dichtlippe (12) mit etwa gleichbleibendem Abstand dazu ein ebenfalls umlaufender Steg 13 vorgesehen ist, wobei die Lippe und der Steg ungefähr der äußeren Kontur des anzuhebenden Objektes entsprechen, und daß auf diese Weise ein umlaufender Ringkanal (17) gebildet ist, der keine Verbindungskanäle zur Unterdruckquelle aufweist.

8. Saugteller nach Anspruch 7, dadurch gekennzeichnet, daß innerhalb des umlaufenden Steges (13) mit etwa gleichbleibender Abstand dazu ein weiterer umlaufender Steg (14) angeordnet ist, so daß zwischen diesen beiden Stegen ein Ringkanal (18) entsteht, der vorzugsweise mit Hilfe von Querstegen (16) in vier bis zwölf Saugkammern unterteilt ist, von welchen jede mindestens einen Verbindungskanal (21) zur Unterdruckquelle aufweist.

9. Saugteller nach Anspruch 8, dadurch gekennzeichnet, daß die Fläche innerhalb des inneren umlaufenden Steges (14) durch weitere Stege (15) in zahlreiche, vorzugsweise längliche und parallel zueinander verlaufende Saugkammern (19) unterteilt ist, von denen jede wenigstens einen Verbindungskanal (22a, 22b) zur Unterdruckquelle aufweist.

10. Saugteller nach einem der vorhergehenden Ansprüche, dadurch gekennzeichnet, daß jede der zahlreichen Saugkammern (18, 19) ringsum von Stegen begrenzt ist, deren untere Flächen, mit welchen sie auf den anzuhebenden Objekten anliegen, 1 bis 4 mm breit sind.

11. Saugteller nach einem der vorhergehenden Patentansprüche, dadurch gekennzeichnet, daß die Breite der Saugkammern (19) meist wesentlich kleiner als ihre Länge ist und vorzugsweise weniger als 20 mm beträgt.

12. Saugteller nach einem der vorhergehenden Patentansprüche, dadurch gekennzeichnet, daß die Saugkammern (19) schräge Flanken (20) besitzen, deren Winkel relativ zur Oberfläche des anzuhebenden Objektes deutlich unter 90° und vorzugsweise bei etwa 45° liegt.

13. Saugteller nach einem der vorhergehenden Patentansprüche, dadurch gekennzeichnet, daß der elastisch verformbare Elastomerkörper (11) in seinem der Dichtungslippe (12) gegenüberliegenden Bereich eine Hinterschneidung (25) aufweist, welche zur Aufnahme des starren Unterdruck-Anschlußstückes 26 dient, und daß die Abdichtung zwischen der Hinterschneidung und dem Anschlußstück (26) ohne weitere Maßnahmen lediglich durch das Befestigen des Anschlußstückes (26) am Unterdrucksystem sowie zusätzlich durch den Unterdruck selbst erfolgt.

14. Saugteller nach einem der vorhergehenden Patentansprüche, dadurch gekennzeichnet, daß jeder Verbindungskanal (21, 22) in einen an die Saugkammern (19) anschließenden vertikalen Abschnitt (21a, 22a) sowie einen sich daran anschließenden horizontalen Abschnitt (21b, 22b) unterteilt ist.

15. Saugteller nach einem der vorhergehenden Patentansprüche, dadurch gekennzeichnet, daß die horizontal verlaufenden Verbindungskanalabschnitte (22a, 22b) von wenigstens einem Hauptkanal (31, 33) abzweigen, der in der der Dichtungslippe (12) gegenüberliegenden Oberfläche des Elastomerkörpers (11) ausgebildet ist.

16. Saugteller nach einem der vorhergehenden Patentansprüche, dadurch gekennzeichnet, daß zur Herstellung des Elastomerkörpers (11) eine Vulkanisationsform vorgesehen ist, deren Trennebene (23) zwischen Ober- und Unterform innerhalb des vollen Elastomer-Querschnittes verläuft, wobei diese Trennebene im wesentlichen mit der Bodenebene der horizontal verlaufenden Verbindungskanäle (22a, 22b, 31, 33) zusammenfällt, und daß in einer der beiden Formhälften die Kanäle (22b, 21b) parallel zur Formtrennebene (23) verlaufend und in der anderen Formhälfte die Kanäle (21a, 22a) hingegen senkrecht zur Formtrennebene (23) verlaufend erzeugt werden, so daß alle Verbindungskanäle sowie deren Verästelungen und Richtungsänderungen bei der Vulkanisation ohne komplizierten Formaufbau und ohne nachfolgende Arbeitsgänge entstehen.

17. Saugteller nach einem der vorhergehenden Patentansprüche, dadurch gekennzeichnet, daß die Lage der Formtrennebene (23) durch die Lage der Grenzebene zwischen den vertikal verlaufenden Verbindungskanalabschnitten (21a, 21b) und den horizontal verlaufenden Kanalabschnitten (22a, 22b, 31, 33) gegeben ist.

18. Saugteller nach einem der vorhergehenden Patentansprüche, dadurch gekennzeichnet, daß die in der Oberfläche des Elastomerkörpers (11) ausgebildeten horizontalen Verbindungskanalabschnitte (21b, 22b, 31, 33) eine Tiefe von 2 bis 6 mm, vorzugsweise von etwa 4 mm, aufweisen.

Fig. 1

Fig. 2

EP 0 325 280 A1

Fig. 3

Fig. 4

Fig. 5

Fig. 6

Fig. 7

Fig. 8

Fig. 9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 576 004 (SOCIETE LERM S.A.) <br> * Zusammenfassung; Figur; Seite 1, Zeile 32 - Seite 2, Zeile 11 * | 1 | B 66 C 1/02 <br> B 65 G 47/91 |
| A | --- | 5 | |
| Y | FR-A-2 182 787 (DBM INDUSTRIES LTD) <br> * Figuren 1-7; Seite 5, Zeilen 26-30; Seite 5, Zeile 40 - Seite 6, Zeile 29; Seite 12, Zeilen 11-15; Seite 18, Zeilen 2-37 * | 1 | |
| A | --- | 2,4,5, 10,14 | |
| Y | FR-A-2 273 748 (JOULIN) <br> * Figuren; Seite 2, Zeilen 10-25 * <br> --- | 1,10,11 | |
| Y | FR-A-2 495 592 (LAVERRIERE) <br> * Figuren; Seite 3, Zeile 31 - Seite 4, Zeile 13; Seite 4, Zeilen 27-33 * <br> --- | 1,10,11 | |
| A | DE-A-2 330 204 (THERMAK GmbH & CO. KG) <br> * Figuren; Seite 5, Zeilen 7-20 * <br> --- | 1,10 | **RECHERCHIERTE SACHGEBIETE (Int. Cl.4)** |
| A | FR-A-1 206 644 (KODAK-PATHE) <br> * Figuren 9-13; Seite 4, rechte Spalte, Zeilen 8-38 * <br> --- | 1,2,4 | B 66 C <br> B 65 G <br> B 65 H <br> B 25 J <br> B 25 B <br> B 65 B |
| A | US-A-3 720 433 (ROSFELDER) <br> * Figuren 1-3; Spalte 3, Zeilen 20-58 * <br> --- | 1,2,4 | |
| A | US-A-3 698 755 (SINCLAIR) <br> * Figuren 2-6; Spalte 4, Zeilen 38-42 * <br> ---       -/- | 1,6,10, 11 | |

Der vorliegende Recherchenbericht wurde für alle Patentansprüche erstellt

| Recherchenort | Abschlußdatum der Recherche | Prüfer |
|---|---|---|
| DEN HAAG | 07-04-1989 | GUTHMULLER J.A.H. |

Europäisches
Patentamt

# EUROPÄISCHER RECHERCHENBERICHT

Nummer der Anmeldung

EP 89 10 0979

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A- 521 267 (PILKINGTON BROTHERS LTD) <br> * Insgesamt * <br> --- | 1,7 | |
| A | FR-A-1 181 030 (REGIE NATIONALE DES USINES RENAULT) <br> * Insgesamt * <br> --- | 1,8 | |
| A | US-A-3 602 543 (SJODIN) <br> * Figuren; Spalte 2, Zeilen 4-32 * <br> --- | 1,7-10 | |
| A | US-A-4 162 018 (ARYA) <br> * Figuren 3-5; Spalte 4, Zeilen 20-48 * <br> --- | 1,11,12 | |
| A | DE-A-2 629 160 (FIRMA CARL FREUDENBERG) <br> * Figur 1; Seite 6, Zeilen 1-16 * <br> --- | 1,2,10, 12 | |
| A | FR-A-1 207 351 (SOCIETE UNILEVER N.V.) <br> ----- | | |

RECHERCHIERTE SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| DEN HAAG | 07-04-1989 | GUTHMULLER J.A.H. |

EPO FORM 1503 03.82 (P0403)